# EUROPEAN PATENT SPECIFICATION

(11) **EP 3 093 729 B1**
(45) Date of publication and mention of the grant of the patent: **14.10.2020**
(21) Application number: 16152564.7
(22) Date of filing: 25.01.2016
(51) Int. Cl.: G05D 16/00, G05D 16/06, F24D 19/10, F24D 10/00, F16K 31/165, F16K 31/126

(54) **VALVE ACTUATOR WITH SETTING ACTUATOR**
VENTILANTRIEB MIT EINSTELLANTRIEB
ACTIONNEUR DE VANNE À ACTIONNEUR DE RÉGLAGE

(30) Priority: 26.03.2015 DK 201500189
(43) Date of publication of application: 16.11.2016
(73) Proprietor: Danfoss A/S, 6430 Nordborg (DK)
(72) Inventor: RUSTJA, Bozidar, 1291 Skofljica (SI); DROBEZ, Benjamin, 1000 Ljubljana (SI); ZAGAR, Tomaz, 1357 Notranje Gorice (SI); OBLAK, Uros, 1215 Medvode (SI); PODRZAJ, Gregor, 1315 Velike Lasèe (SI)

(56) References cited:
- US-A- 1 228 104
- US-A- 4 596 264
- US-A1- 2014 277 764

## Description

The present invention relate to affecting the operation of a control valve by changing a system parameter in a fluid flow system when the control valve operates under a condition that would influence the overall operation of the fluid flow system. This is done by introducing a balancing system capable to balance the system parameter to an adjustable setpoint and where the balancing system comprises a setting actuator capable of adjusting the setting of the setpoint in response to an operating value of the control valve. In the main but not limiting embodiment of the present invention the fluid flow system is a heating systems connected to a district heating supply where the fluid flow is controlled by the control valve, and where a balancing system being a differential pressure controller comprising a differential pressure valve actuator affecting a balancing valve and where the setpoint is the set differential pressure that can be affected by the setting actuator optionally remotely controlled.)

### BACKGROUND

It is well known that in heating systems such as for district heating where a remotely supplied heating fluid heats domestic water and water to be fed to heating devices like floor heating systems and radiators, one of the preconditions for a well-functioning (oscillation and noise free) control is the use of a differential pressure controller for the control of the differential pressure across the system, such as the heating system

If the differential pressure is not chosen correctly the risk is malfunctions such as pressure oscillation and noise in the system. Differential pressure controllers are used to maintain differential pressure in a system regardless of the variation of differential pressure in the supply net and consumption in the system.

Differential pressure controllers also are used to create a hydraulic balance in a network.

One example is US4596264 disclosing a fluid flow pressure control valve includes a valve body having a chamber divided by a dashpot plate into an inlet chamber and a dampened flow region chamber. A diaphragm senses the fluid pressure forces in the chamber with an adjustable spring force acting to balance the fluid pressure forces exerted on the other side of the diaphragm. By varying the spring force with a follower piece, which moves axially along a stationary threaded shaft, the amount of fluid pressure necessary to balance the spring force can be selectively varied.

Use of differential pressure controllers in substations and in the district heating network will maintain a hydraulic balance in the network which ensures a good distribution of water in the supply network and that the desired pressure level in the network can be achieved leading to an adequate heat supply in the network. The correct balancing ensures that the quantity of circulating water in the network can be limited giving reduced costs for water circulation. Due to balancing of the network the pressure drop on e.g. a substation or control valve is always the designed one and no excess energy is needed for pressure pumps.

Most problems arise when the control valve is almost closed leaving only a small through flow where the control becomes difficult and may lead to oscillations.

### SUMMARY OF THE INVENTION

The object of the present invention foremost is to enhance control performance of the system even at flow rates where the control valve connected to the flow system operates under conditions affecting the overall operation of the flow system, such as when the valve is almost closed.

The object is solved by introducing a valve actuator adapted to react to balance a system parameter of the flow system to an adjustable setpoint, and where a setting actuator are connected to re-adjust the adjustable setpoint. Adjusting the setpoint changes the overall operation of the flow system to induce the control valve to operate at a value of operation where there is less risk of undesirable effects such as oscillation and noise.

To form the actual balancing of the system parameter the valve actuator is connected to a balancing valve connected to the flow system where the valve actuator affects the valve opening of the balancing valve. Together this forms a balancing system.

To effectuate the setting of the valve actuator to the desired setpoint it comprises a biasing member, where the biasing member is affected by the setting actuator.

In the embodiment of the present invention related where the balancing parameter is a differential pressure the adjustable setpoint may adjusted by changing the tension of a biasing element affecting a dislocation member. The system may be formed as a traditional differential pressure balancing system having the dislocating member in the form of a membrane where the opposing sides of the membrane is in pressure communication with different positions in the flow system where to the control valve and balancing valve is connected. The membrane then will deflect according to the differential pressure and through connected valve stems affect the flow through the system by biasing the valve opening of the balancing valve. This is all a traditional setup as it is well known in the art. The adjustable setpoint then is the differential pressure regulation of the balancing valve and where this is set by changing the tension or compression of a setting spring connected to the membrane in any manner.

In one embodiment of the present invention the setpoint is changed when the operation (such as valve opening) of the control valve gets below a critical threshold value indicating the performance of the system may become poor. The change of the setpoint such as a change of the setpoint differential pressure thus affects the flow rates in the system and thereby the operation of the control valve, such as its valve opening.

### FIGURES

- Fig. 1A: The setting actuator in a first position connection to a valve actuator according to one embodiment of the present invention.
- Fig. 1B: The setting actuator in a second connection to a valve actuator according to one embodiment of the present invention.
- Fig. 2: The valve actuator connected to a balancing valve.
- Fig. 3: Illustration of a district heating flow system where the present invention with advantage could be used.

### DETAILED DESCRIPTION OF THE INVENTION

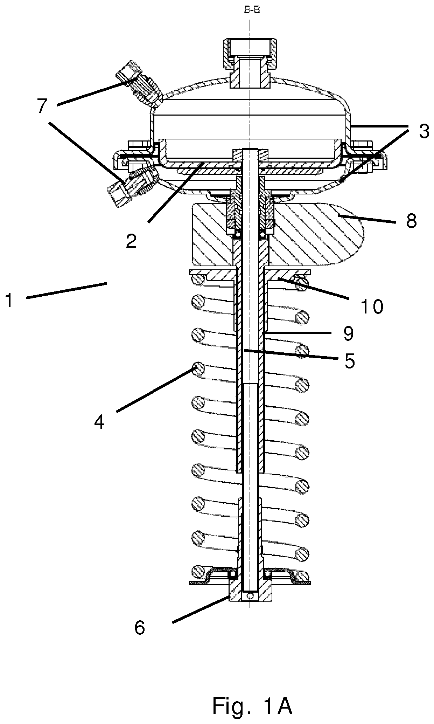

Fig. 1A illustrates an example of a valve actuator (1) where the present invention with advantage could be used, the illustrated valve actuator being a differential pressure actuator.

The valve actuator (1) in the example comprises a disc supported membrane (2), enclosed in a membrane enclosure (3). Alternatively to the membrane (2) the valve actuator (1) could comprise a piston etc. In general it could be referred to a dislocating member (2). In the following it will be referred to as a membrane (2).

The membrane (2) is connected to a biasing element (4) in the following without loss of generality referred to as the spring (4) over a spindle (5) (or valve stem, etc.) and a nut (6). Pressure signals are carried to both sides of the membrane (2) via pressure connectors (7) on the membrane enclosure (3) that could be a separate (standalone) component or integrated.

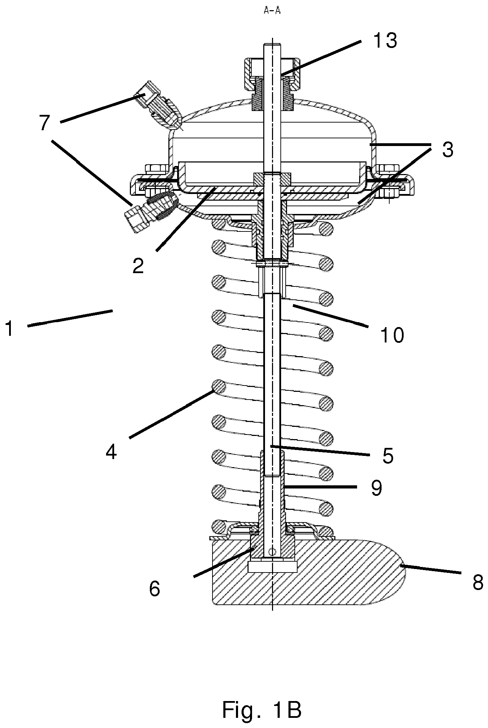

A setting actuator (8) is mounted in connection to the spring (4) and is adapted to change its compression or tension. The setting actuator (8) in the example rotates a threaded bush (9) connected to a threaded spring plate (10) that transforms the rotation of the threaded bush (9) into translation to change compression of the spring (4). The rotation of the threaded spring plate is prevented such as by an anti-rotation rod that is not shown in Figure 1A. In the illustration the spring actuator (8) is mounted between the membrane enclosure (3) and the spring (4) like in Figure 1B, however it may in alternative embodiments be positioned otherwise, such as at the end of the spring (4), just as the construction of e.g. the threaded bush (9) may be different, or may use alternative elements to transfer the change of tension / compression from the setting actuator (8) to the spring (8) (or biasing element in general).

The setting actuator (8) may comprise a motor or any other means capable to perform an actuation such as change the compression or tension on the spring (4). It may be powered by an external supply, by a battery or by any other means like solar cells etc.

The setting actuator (8) in one embodiment comprises an e.g. a CPU or control modules of any kind and may be in data exchange connection to sensors according to the needed input data required to perform the control and adjustments. In another embodiment the setting actuator (8) is in data exchange connection to an external CPU or control modules of any kind that may be in data exchange connection to sensors according to the needed input data required to perform the control and adjustments.

The CPU, controller etc. of whatever kind it may be in advanced embodiments and be programmable making it possible to change or upload new software.

The basic function of the differential pressure actuator is to form pressure connection through the pressure connectors (7) to different locations on the flow system e.g. through impulse tubes in the classic manner, such that the different opposing sides of the membrane (2) are in pressure contact with different flow locations forming a differential pressure over the membrane (2). This pressure difference produces a force which tries to move the membrane (2) in the direction of the force and may be connected to a-valve that e.g. closes on rising differential pressure and opens on falling differential pressure (or vice versa) to regulate the differential pressure over the control valve in order to maintain constant differential pressure over it.

This force from the differential pressure over the membrane (2) is counteracted by a force from the spring (4), and the operating pressure of the differential pressure actuator is determined by the equilibrium of respectively the spring force and the differential pressure force. The differential pressure setting is thus related to the tension or compression of the spring (4) and by changing this tension or compression the differential pressure setting thus may be adjusted, where this change or adjustment can be done manually or via the setting actuator (8).

Fig. 1B illustrates same valve actuator (1) only where the setting actuator (8) is positioned on in a distal position of the spring (4) relative to the membrane enclosure (3), alternatively it could be positioned anywhere on in relation to the spring (4).

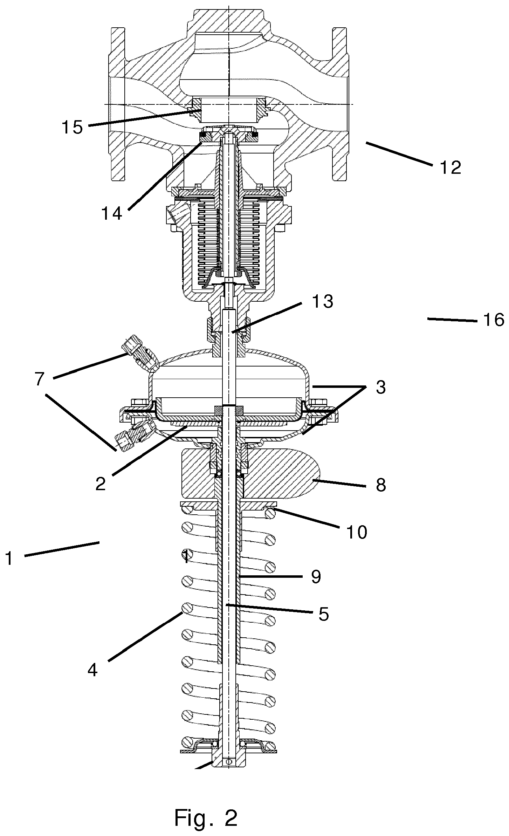

Fig. 2 illustrates a balancing system (16) formed of the valve actuator (1) connected to a balancing valve (12) through a valve stem (13) reaching through an opening (11) of the actuator and being connected to the membrane (2). The stem (13) either directly or indirectly through intermediate parts is connected to the valve element (14), or valve cone, operating in relation with the valve seat (15) to control flow through the balancing valve (12) in the classic manner, where the valve seat (15) is positioned between an inlet and an outlet. Valve stem (13) is to be understood as any means able to translate the valve element (14) in response to a dislocation / deflection of the membrane (2). The valve element (14) in this embodiment is translated in a direction towards or away from the valve seat (15) to change the valve opening defined by the distance of the valve element (14) to the valve seat (15).

The system could include any other means such as other biasing members like springs or bellows etc., as they are well known in the arts.

Having the tension of the spring (4) set by the setting actuator (8) offers the possibility of remote controlled adjustment of the spring (4), and thus of the differential pressure setpoint.

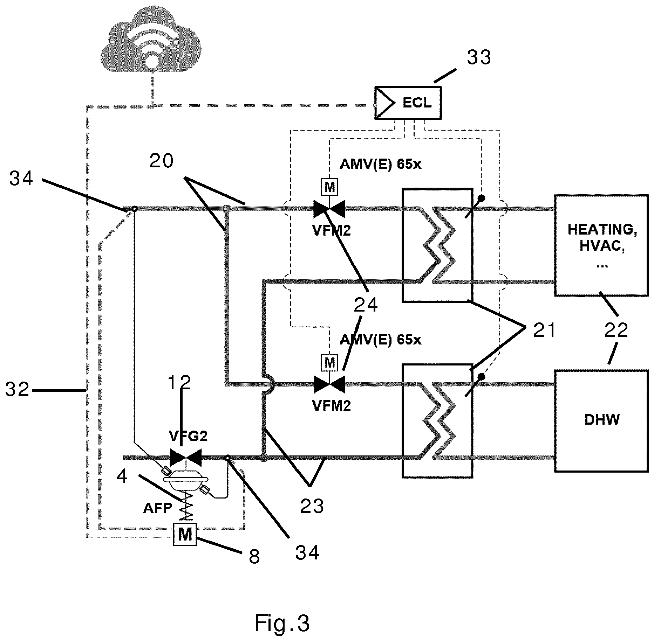

Fig. 3 illustrate the present invention in a heating system comprising a network of fluid communications having inlet lines (20) feeding e.g. heating fluid to heat exchanging devices (21) heating water to be feed to the end heaters (22) such as domestic water devices, radiators, floor heating HVAC systems etc... The heating fluids subsequently are returned through return lines (23). Valves (24), sensors, controllers and other means may be connected to the system for the control and regulation, where one or both of the valves (24) could be the control valve according to the present invention. The control valves (24) are regulated to deliver a flow of fluid meeting heating demand and are operated by a controller, such as e.g. the same controller (33) as controlling the balancing valve (12), but this may in other embodiments not be the case. The operation value of interest to the present invention of the control valve such as valves (24), such as valve opening, may in any manner be known to the system and reported to controller (33).

The balancing valve (12) is connected to the return line (23), but could alternatively be connected to an inlet line (20), and comprises the setting actuator (8) in adjustment connection to the spring (4), where the setting actuator (8) is remotely operated such as by wired or wireless communication (32) able to exchange information to and from the setting actuator (8) to a controller (33). Further it may be connected to a number of different sensors (34) to receive information about flows, temperatures, actuations of other valves etc.

The setting actuator (8) can be controlled remotely by SCADA or other system or locally by signal from pressure measuring system on controller

The exemplified system further comprises means to identify when the control valve is almost closed leaving only a small through flow such that the control becomes difficult and may lead to oscillations. Such means could include sensors within the control valve-like the control valve e.g. having a signal channel over which it reports its position.

In one main aspect of the present invention relevant to the above example embodiment, when the control valve opening and / or the flow rate gets below a critical threshold value, the system will detect this and adjust the differential pressure setting to ensure the control valve to be more open for the same flow rate. In the illustrated embodiment this is ensured by decreasing the differential pressure setting.

The system could be self-adjusting reacting at any time to adjust the setpoint when the control valve operates below the critical threshold value (such as when the valve opening becomes critically low) for certain amount of time and readjusts when the operating point of the control valve rises and remains above the threshold for certain period of time. In another version it additionally or alternatively includes a change of setpoint according to other parameters such as the seasons, like changing the setpoint in response to the calendar.

One embodiment of the present invention relate to a change of the heating fluid supply temperature, such as a difference in e.g. in the winter period compared to the summer period, where in the winter period both heating and hot domestic water supply is needed and the temperature of the hating fluid, or water, typically is significantly higher than in the summer period when only the hot domestic water supply is really needed. The setpoint of the setting actuator (8) may be adjusted in accordance with this change, e.g. if the temperature is high the district heating control valve should operate closer to closed position in order to get the same amount of heat than during the summer, therefore the differential pressure over it can be lowered during winter season and thus forcing higher opening of the district heating control valve since district heating valves typically are dimensioned for summer conditions with lower differential pressure and supply temperature, and thus are oversized at higher differential pressures and supply temperatures during winter season, thus giving a lower stroke to give lower flow but risking oscillations. Other splits of the changes could also be imagined, such as on a daily level reflecting e.g. the expected ambient temperature etc. conditions, or at a weekly level or monthly level.

In a further embodiment of the present invention several of the different strategies are combined, e.g. by setting a 'super-setpoint' in response to change in seasons and then adjust this based on the opening of the control valve getting below a critical threshold value, or more generally when then control valve operates below the critical threshold value.

## Claims

1. A flow balancing system comprising a valve actuator (1), a differential pressure balancing valve (12), a setting actuator (8), and a control valve (24), where the valve actuator (1) is connected to the differential pressure balancing valve (12) where the balancing valve (12) is capable of being set to an adjustable setpoint of a differential pressure where the setting actuator (8) is mounted in connection to the valve actuator (1) and is adapted to adjust said setpoint, **characterized in that**, the flow balancing system is further comprising a controller (33), the setting actuator (8) is in data exchange connection to the controller (33) also being in communication to said control valve (24) and where said controller is adapted to change said setpoint when an operation of said control valve (24) gets below a critical value.

2. A flow balancing system according to claim 1, wherein the adjustable setpoint is adjusted by changing the tension of a biasing element (4) affecting a dislocation member (2).

3. A flow balancing system according to claim 2, wherein the dislocating member (2) is connected to a valve element (14) operating in relation with the valve seat (15) to control flow through the valve (12).

4. A flow balancing system according to claim 3, wherein the dislocating member (2) is a membrane and the biasing element (4) is a spring.

5. A method of operating A flow balancing system according to any of the previous claims, the method being to detect if the control valve opening of said control valve (24) gets below a critical threshold value, and if so, to adjust said adjustable differential pressure setpoint of said the balancing valve (12) connected to the same flow system as said control valve (24) operating below the critical threshold value, to ensure the control valve to be more open for the same flow rate.

6. The method according to one of claim 5, where the setpoint is changed in relating to a predefined date and /or time.

7. The method according to one of claims 5 or 6, where said balancing valve (12) and control valve (24) are connected to a heating system supplied with heat from a district heating fluid supply having a supply temperature, and where the setting is adjusted according to said supply temperature.

## Patentansprüche

1. Flussausgleichssystem, umfassend einen Ventilantrieb (1), ein Differenzialdruckausgleichsventil (12), einen Einstellantrieb (8) und ein Steuerventil (24),
wobei der Ventilantrieb (1) mit dem Differenzialdruckausgleichsventil (12) verbunden ist,
wobei das Ausgleichsventil (12) auf einen einstellbaren Einstellpunkt eines Differenzialdrucks eingestellt werden kann, wobei der Einstellantrieb (8) in Verbindung mit dem Ventilantrieb (1) montiert ist und dazu angepasst ist, den Einstellpunkt einzustellen,
**dadurch gekennzeichnet, dass** das Flussausgleichssystem ferner eine Steuerung (33) umfasst, wobei der Einstellantrieb (8) in Datenaustauschverbindung mit der Steuerung (33) ist, ebenfalls in Kommunikation mit dem Steuerventil (24), und
wobei die Steuerung dazu angepasst ist, den Einstellpunkt zu ändern, wenn eine Operation des Steuerventils (24) unter einen kritischen Wert gelangt.

2. Flussausgleichssystem nach Anspruch 1, wobei
der einstellbare Einstellpunkt eingestellt wird durch Ändern der Spannung des Vorspannelements (4), das sich auf ein Versetzungselement (2) auswirkt.

3. Flussausgleichssystem nach Anspruch 2, wobei
das Versetzungselement (2) mit einem Ventilelement (14) verbunden ist, das in Beziehung mit dem Ventilsitz (15) arbeitet, um Fluss durch das Ventil (12) zu steuern.

4. Flussausgleichssystem nach Anspruch 3, wobei
das Versetzungselement (2) eine Membran ist und das Vorspannelement (4) eine Feder ist.

5. Verfahren zum Betreiben eines Flussausgleichssystems nach einem der vorhergehenden Ansprüche, wobei das Verfahren dazu dient zu detektieren, ob die Steuerventilöffnung des Steuerventils (24) unter einen kritischen Schwellenwert gelangt, und wenn das der Fall ist, den einstellbaren Differenzialdruck-Einstellpunkt des Ausgleichsventil (12), das mit dem gleichen Flusssystem verbunden ist wie das Steuerventil (24), das unter dem kritischen Schwellwert arbeitet, einzustellen, um sicherzustellen, dass das Steuerventil für die gleiche Flussrate weiter geöffnet ist.

6. Verfahren nach Anspruch 5, wobei
der Einstellpunkt in Bezug auf ein vordefiniertes Datum und/oder eine Zeit geändert wird.

7. Verfahren nach einem der Ansprüche 5 oder 6, wobei
das Ausgleichsventil (12) und das Steuerventil (24) mit einem Heizsystem verbunden sind, das mit Wärme von einer Fernwärmefluidversorgung, die eine Versorgungstemperatur aufweist, versorgt wird, und wobei die Einstellung gemäß der Versorgungstemperatur eingestellt wird.

## Revendications

1. Système d'équilibrage de flux comprenant un actionneur de vanne (1), une vanne d'équilibrage de pression différentielle (12), un actionneur de réglage (8) et une vanne de régulation (24), l'actionneur de vanne (1) étant connecté à la vanne d'équilibrage de pression différentielle (12), la vanne d'équilibrage (12) pouvant être réglée à un point de consigne réglable d'une pression différentielle, l'actionneur de réglage (8) étant monté en connexion avec l'actionneur de vanne (1) et étant conçu pour régler ledit point de consigne, **caractérisé en ce que**, le système d'équilibrage de flux comprend en outre un dispositif de commande (33), l'actionneur de réglage (8) est en connexion d'échange de données avec le dispositif de commande (33) qui est également en communication avec ladite vanne de régulation (24) et ledit dispositif de commande est conçu pour changer ledit point de consigne lorsqu'un fonctionnement de ladite vanne de régulation (24) passe en dessous d'une valeur critique.

2. Système d'équilibrage de flux selon la revendication 1, dans lequel le point de consigne réglable est réglé en modifiant la tension d'un élément de sollicitation (4) affectant un élément de dislocation (2).

3. Système d'équilibrage de flux selon la revendication 2, dans lequel l'élément de dislocation (2) est relié à un élément de vanne (14) fonctionnant en relation avec le siège de vanne (15) pour réguler le flux à travers la vanne (12).

4. Système d'équilibrage de flux selon la revendication 3, dans lequel l'élément de dislocation (2) est une membrane et l'élément de sollicitation (4) est un ressort.

5. Procédé de fonctionnement d'un système d'équilibrage de flux selon l'une quelconque des revendications précédentes, le procédé permettant de détecter si l'ouverture de vanne de régulation de ladite vanne de régulation (24) passe en dessous d'une valeur de seuil critique, et si c'est le cas, de régler ledit point de consigne de pression différentielle réglable de ladite vanne d'équilibrage (12) connectée au même système de flux que ladite vanne de régulation (24) fonctionnant en dessous de la valeur de seuil critique, pour assurer que la vanne de régulation soit plus ouverte pour le même flux.

6. Procédé selon la revendication 5, où le point de consigne est modifié par rapport à une date et/ou une heure prédéfinie.

7. Procédé selon l'une des revendications 5 et 6, où ladite vanne d'équilibrage (12) et ladite vanne de régulation (24) sont connectées à un système de chauffage alimenté par la chaleur émanant d'une alimentation centralisée en fluide de chauffage ayant une température d'alimentation, et où le réglage est ajusté en fonction de ladite température d'alimentation.
